# EUROPEAN PATENT SPECIFICATION

(11) **EP 0 834 765 B1**
(45) Date of publication and mention of the grant of the patent: **03.12.2003**
(21) Application number: 97307835.5
(22) Date of filing: 03.10.1997
(51) Int. Cl.: G03B 21/16, G02F 1/133

(54) **Projection display apparatus**
Projektionsanzeigevorrichtung
Dispositif d'affichage par projection

(30) Priority: 04.10.1996 JP 26495196; 28.10.1996 JP 28569096; 26.08.1997 JP 22954197
(43) Date of publication of application: 08.04.1998
(60) Divisional application: 03076890.7
(73) Proprietor: SEIKO EPSON CORPORATION, Tokyo 163 (JP)
(72) Inventor: Furuhata, Mutsuya, Suwa-shi, Nagano-ken 392 (JP); Takizawa, Takeshi, Suwa-shi, Nagano-ken 392 (JP); Fujimori, Motoyuki, Suwa-shi, Nagano-ken 392 (JP); Kuroda, Akitoshi, Suwa-shi, Nagano-ken 392 (JP); Haba, Shinji, Suwa-shi, Nagano-ken 392 (JP); Miyashita, Kiyoshi, Suwa-shi, Nagano-ken 392 (JP)
(74) Representative: Sturt, Clifford Mark

(56) References cited:
- EP-A- 0 526 653
- PATENT ABSTRACTS OF JAPAN vol. 096, no. 007, 31 July 1996 -& JP 08 068978 A (CASIO COMPUT CO LTD), 12 March 1996, -& US 5 666 171 A (HIDEKI NAKAMURA ET AL.) 9 September 1997 -& PATENT ABSTRACTS OF JAPAN vol. 96, no. 6, 28 June 1996 & JP 08 043785 A (CASIO COMPUT CO LTD), 16 February 1996,
- PATENT ABSTRACTS OF JAPAN vol. 096, no. 008, 30 August 1996 & JP 08 094990 A (FUJI PHOTO OPTICAL CO LTD), 12 April 1996,

## Description

The present invention relates to a projection display apparatus which provides light from a light source modulates such light in response to image information and projects the modulated light on a projection screen.

A typical projection display apparatus includes an optical unit which optically treats light beams emitted from a light source lamp unit to synthesize a color image in response to image information and projects the synthesized light beams on a screen through a projection lens unit; the apparatus includes a power unit, and a circuit board unit including control circuits.

The optical unit splits light beams emitted from the light source lamp unit into red, blue and green three color light beams, modulates these color light beams with light valves provided in a liquid crystal panel in response to image information, recombines the modulated color light beams with a cross dichroic prism or the like, and projects the combined light beams on a screen.

Japanese Patent Application No. 7-225379 discloses a projection display apparatus provided with a polarized light conversion device for aligning the polarization direction of the light beams emitted from a light source lamp unit. The polarized light conversion device has a polarized beam splitter array provided with a plurality of sets of polarized light separating films and reflection films which are parallel to each other which the polarized beam splitter array separates the incident light beams into two types of straight polarized light components, and aligns the polarization direction of these two types of straight polarized light components.

Some elements of the projection display apparatus, e.g. the polarized light conversion device and the optical unit, are stored in an armoring or protective case. Among them, the front end at the projection side of the projection lens unit is protruded from the front face of the protective case. The protective case is provided with an operating section including a power switch, a light beam receiving window for a remote control beam, and input/output terminals for sending signals to and receiving them from external devices.

In such a projection display apparatus, optical devices in the light source lamp unit, the power unit and the optical unit are heating sources. Among the optical devices, liquid crystal light valves and their respective polarization plates are main heating sources because they absorb part of transmitting light beams.

In order to cool these heating sources, the projection display apparatus is provided with a cooling system.

In general, the cooling system introduces external air into the protective case through the intake port by a suction fan, circulates the introduced air to cool the protective case, and exhausts the air through an air outlet provided on the protective case to the outside with an exhaust fan.

In such a cooling system, the power unit which will rapidly reach high temperature is provided with a suction fan to introduce the air in the protective case to the interior of the power unit for cooling.

The power unit includes a primary active filter, a power supply, a ballast and the like. Devices, such as a transmitter FET are mounted on the circuit board of the primary active filter. Devices, such as a rectifier diode bridge, an oscillating transistor for D/D converter and a triode regulator for D/D converter, are mounted on the circuit board of the power supply. Also, devices, such as a driving FET for chopper circuit and a reverse-current preventing diode for chopper circuit, are mounted on the circuit board of the ballast. In the power unit, since these devices are heat sources, heat sinks are fixed to these devices to enhance the cooling efficiency, and the air introduced with the suction fan cools the heat sinks.

Since the air to be introduced to the power unit in the protective case has been already heated by other heating elements during circulating through the protective case and thus is hotter than the open air, it cools the power unit with less efficiency.

When the air in the protective case is sucked with the suction fan, the open air containing foreign matters may be introduced through openings of the protective case, e.g. the gap between the projection lens unit and the protective case. As a result, the foreign matters invaded into the case will adhere to the optical system and will deteriorate the display quality, resulting in unreliability.

The polarized light conversion device is heated because the polarized light separating film and the reflection film absorb a part of incident light. The device has no cooling means notwithstanding that it must be cooled. The polarized light conversion device is therefore cooled by the air circulating from the suction fan to the outlet, and thus the device may not be efficiently cooled due to insufficient circulation of the cooling air in some apparatus configurations.

### SUMMARY OF THE INVENTION

It is an object of the present invention to provide a projection display apparatus for optically operating light beams emitted from a light source lamp unit and forming an optical image in response to image information in which its power unit can be cooled with high efficiency.

In a first aspect, the invention provides a projection display apparatus comprising an optical unit for forming an optical image in response to image information by optically treating light beams emitted from a light source lamp unit and for expansively projecting the optical image on a projection screen through a projection lens, a power unit and a protective case encasing the optical unit and the power unit; a ventilating path provided inside said power unit for circulating cooling air, a first cooling air intake port located on the protective case for providing cooling air to the optical unit and a second cooling air intake port located on the protective case for providing cooling air to the power unit, and a duct for connecting said second cooling air intake port and the ventilating path that directly conducts cooling air from outside of said protective case to said ventilating path.

Cooling air may be separately provided to the optical unit and said ventilating path of the power unit whereby the optical and power units are cooled independently of one another.

In a second aspect, the invention provides a projection display apparatus comprising:
an optical unit for forming an optical image in response to image information by optically treating light beams emitted from a light source lamp unit and for expansively projecting the optical image on a projection screen through a projection lens, a power unit, a protective case encasing the optical unit and the power unit;
said optical unit including a polarized light conversion device for separating the light beams emitted from said light source lamp unit into two types of linear polarized light components and for aligning the polarizing direction of the linear polarized light components, and
a ventilating path provided inside said protective case for circulating cooling air along at least one face of the light incident face and light emerging face of said polarized light conversion device.

The present invention relates to a projection display apparatus comprising: an optical unit for forming an optical image in response to image information by optically treating light beams emitted from a light source lamp unit and for expansively projecting the optical image on a projection screen through a projection lens, a power unit, and a protective case for storing the optical unit and the power unit; the projection display apparatus further comprising: a ventilating path provided inside the power unit for circulating cooling air, a cooling air intake port formed on the protective case, and a cooling air conducting means for directly conducting the open air outside the protective case from the cooling air intake port to the inlet of the ventilating path.

In the present invention, since the cooling air conducting means is provided for directly conducting the open air to the ventilating path, the interior of the power unit can be cooled with high efficiency by the open air which is cooler than the air in the protective case.

In this case, it is preferred that a ventilating fan for ventilating the interior of the protective case be provided near the light source lamp unit. The air in the protective case including the air exhausted from the ventilating path is thereby collected near the light source lamp unit before being exhausted to the exterior, and thus the heated light source lamp unit can be securely cooled.

It is preferred that the cooling air conducting means include a duct section connecting the cooling air intake port and the inlet of the ventilating path.

Such the duct section can introduce only the open air sucked from the cooling air intake port to the ventilating path and prevent the inflow of the air from the protective case hotter than the open air into the ventilating path. The interior of the power unit can therefore be more efficiently cooled.

It is preferred that the cooling air conducting means include a suction fan provided at the inlet of the ventilating path for drawing in the open air. A large volume of open air can therefore be stably supplied to the ventilating path, and the power unit can be securely cooled with high efficiency.

The connection of the suction fan with the duct section can securely prevent suction of the open air containing foreign matters into the protective case through the openings of the protective case, for example, the gap between the projection lens unit and the protective case. Adhesion of the foreign matters onto the optical system can therefore be prevented, resulting in high image display quality and satisfactory reliability.

Although the location of the power unit provided with the suction fan is not limited inside the protective case, the optical path from the light source lamp unit to the projection lens unit must be provided within the narrow space in the protective case of the projection display apparatus. The power unit is preferably arranged so that the suction fan is located in the free space in the protective case in order to effectively use the space in the protective case.

It is preferred that the projection lens be provided so as to protrude its edge from the protective case, the power unit is provided such that the suction fan be located on the base end of the projection lens unit, and the cooling air intake port be formed in a region of the bottom wall of the protective case including the lower side of the projection lens unit.

In the optical unit, the projection lens unit generally protrudes from the light source lamp unit and the optical devices so that the combined light from the optical device is incident on the base end of the projection lens. When the projection lens unit is arranged so as to protrude its front end from the protective case, a dead space forms at the side of the base end.

In the present invention, since the power unit is provided such that the suction fan is located on the base end of the projection lens unit, the apparatus can be miniaturized as a result of effective use of the space in the protective case.

Further, since the cooling air intake port is formed in a region of the lower side of the projection lens unit, the duct section can be provided in the dead space ranging from the lower side of the projection lens unit to the side of its base end and the space in the protective case can be effectively used.

Also, the present invention relates to a projection display apparatus comprising: an optical unit for forming an optical image in response to image information by optically treating light beams emitted from a light source lamp unit and for expansively projecting the optical image on a projection screen through a projection lens, a power unit, a protective case for storing the optical unit and the power unit, and a ventilating fan for ventilating the interior of the protective case near the light source lamp unit; the projection display apparatus further comprising: a polarized light conversion device facing the emitting surface of the light source lamp unit for separating the light beams emitted from said light source lamp unit into two types of straight polarized light components and for aligning the polarizing direction of the straight polarized light components, and a ventilating path provided inside the protective case for circulating cooling air along at least one face among the light incident face and light emerging face of the polarized light conversion device.

In the present invention, since the ventilating path is provided for circulating the cooling air along at least one face among the light incident face and the light emerging face of the polarized light conversion device, the cooling air can securely circulate near the polarized light conversion device to achieve satisfactory cooling effects regardless of the apparatus configuration.

In this case, it is preferred that a guide be provided for introducing the cooling air circulated along at least one face among the light incident face and light emerging face of the polarized light conversion device to the light source lamp unit.

In such a configuration, the guide can introduce the cooling air after cooling the polarized light conversion device to the light source lamp unit to effectively cool the light source lamp unit. The lamp life can therefore be prolonged, resulting in low frequency of exchange of the light source lamp.

It is preferred that the protective case be provided with an operating section having a plurality of switches including a main switch for turn on/off the main power, and a protruded section protruding from the main switch be provided between the main switch and the switch adjacent to the main switch. Such a configuration can prevent erroneous operation of the main switch.

It is preferred that the protruded section be provided along the periphery of the main switch. This can prevent careless touching to the main switch and thus can securely prevent erroneous operation in use.

It is preferred that a circuit board be provided on the optical unit, and the circuit board be provided with a temperature-sensing element near the light source lamp unit.

Such a configuration can monitor the temperature of the light source lamp unit and can omit wiring between the temperature-sensing element and the circuit board because the temperature-sensing element is directly mounted on the circuit board.

### BRIEF DESCRIPTION OF THE DRAWINGS

A preferred embodiment in accordance with the present invention will now be described with reference to the drawings, wherein:-
Figure 1 is a front view and a rear elevation of a projection display apparatus as preferred embodiment of the present invention;
Figure 2 is a front view and a bottom view of the projection display apparatus in the above-mentioned embodiment;
Figure 3 is an assembly view illustrating the optical system and the power unit in the above-mentioned embodiment;
Figure 4 is a schematic representation of the optical system in the above-mentioned embodiment;
Figure 5 is a cross-sectional view and an isometric view of the polarized light conversion device in the above-mentioned embodiment;
Figure 6 is a planar cross-sectional view illustrating the stream of the cooling air in the projection display apparatus in the above-mentioned embodiment;
Figure 7 is a cross-sectional view illustrating the stream of the cooling air in the projection display apparatus in the above-mentioned embodiment; and
Figure 8 is a cross-sectional view illustrating the stream of the cooling air in the projection display apparatus in the above-mentioned embodiment.

### DESCRIPTION OF THE PREFERRED EMBODIMENT

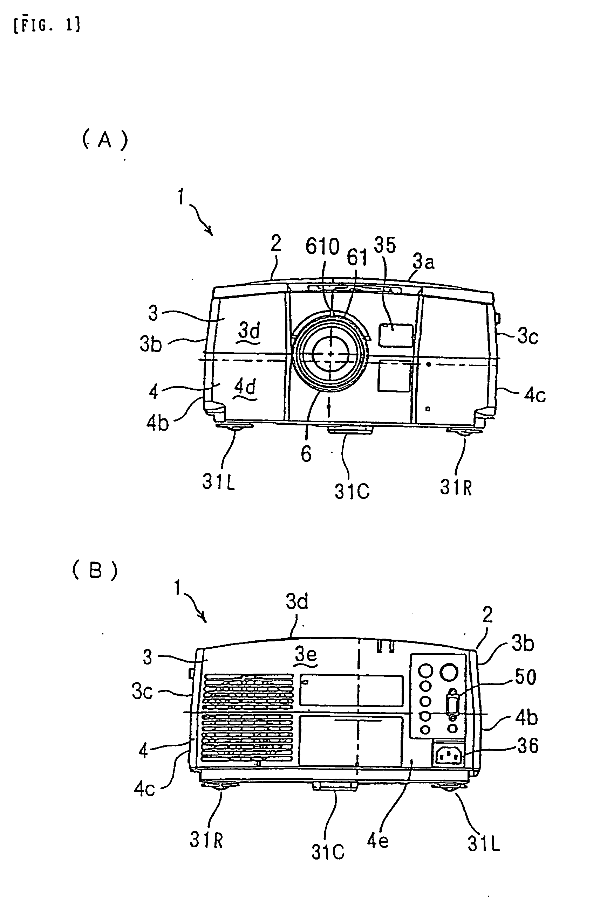

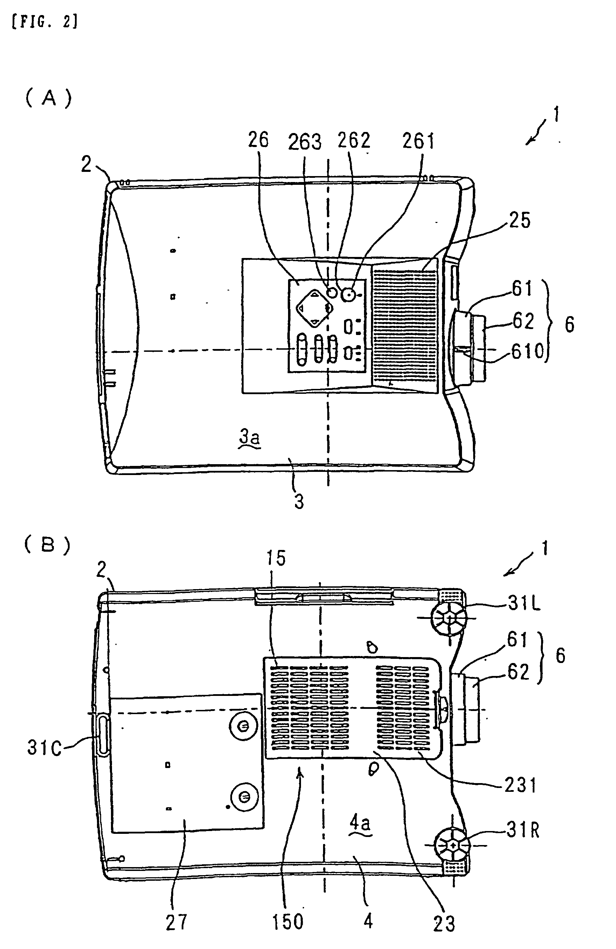

Figures 1(A) and 1(B) are a front view and a rear elevation view, respectively, of a projection display apparatus in accordance with this embodiment. Figures 2(A) and 2(B) are a plan view and a bottom view, respectively, of the projection display apparatus in accordance with this embodiment.

As shown in Figures 1 and 2, the projection display apparatus 1 in accordance with this embodiment has a rectangular parallelepiped protective case 2. The protective case 2 basically consists of an upper case 3 and a lower case 4. The rear wall of the protective case 2 is provided with an AC inlet 36 for supplying external power to the apparatus and an input/output terminal group 50. Users can conveniently use the apparatus, since no signal cables and the like are therefore placed on the side face in which users generally stand.

The upper case 3 of the protective case 2 includes a rectangular top wall 3a, left and right side walls 3b and 3c, a front wall 3d and a rear wall 3e which front wall 3d and rear wall 3e vertically extend from the four sides of the upper wall toward the lower side. The lower case 4 include a rectangular bottom wall 4a, left and right side walls 4b and 4c, a front wall 4d and a rear wall 4e which front wall 4d and rear wall 4e vertically stand from the four sides of the bottom wall.

The upper case 3 and the lower case 4 hold slightly on the left side of the center in the front view, the front end of a projection lens unit 6 extending toward the front side of the apparatus from a circular opening formed thereon, and the top of the projection lens unit protrudes from the front face of the protective case 2.

A zoom ring 61 holding a zoom lens in the protruded section has a protuberance 610, such as a linear knob extending to the axis line direction. The zoom ring 61 and a focus ring 62 can therefore be distinguished from each other by touch and conveniently rotated. The protuberance 610 may be provided on the focus ring 62 notwithstanding that it does not prevent motion of the focus ring 62.

As shown in Figure 1(A), a light-receiving window 35 is provided on the front wall 3d of the upper case 3 on the right of the projection lens unit 6. The receiving window 35 is provided for receiving control light beams passing through a remote controller not shown in the drawings.

In the center of the front side of the top wall 3a of the upper case 3, a number of holes 25 are formed at the position of a self-contained speaker (not shown in the drawings) as shown in Figure 2A.

The center of the front side of the top wall 3a is also provided with an operating switch section 26. A protuberance section 262 is provided between the main switch 261 for turning on/off the main power and the adjacent switch 263 among switches formed on the operating switch section 26, in which the protuberance section 262 is protruded from the main switch 261. The protuberance section 262 has an arc shape along the periphery of the circular main switch 261. In detail, it has an angle range of 90 degrees along the periphery of the main switch 261. Since the arc protuberance 262 is protruded from the top of the main switch 261, other switches can be operated without erroneous touching of the main switch 261 and erroneous operation can be securely prevented.

A foot 31C is provided in the center of the rear end of the bottom wall 4a of the lower case 4, and feet 31R and 31L are provided on the left and right of the front end. The height of each of the left and right feet 31R and 31L, from the bottom wall 4a is adjustable by rotation.

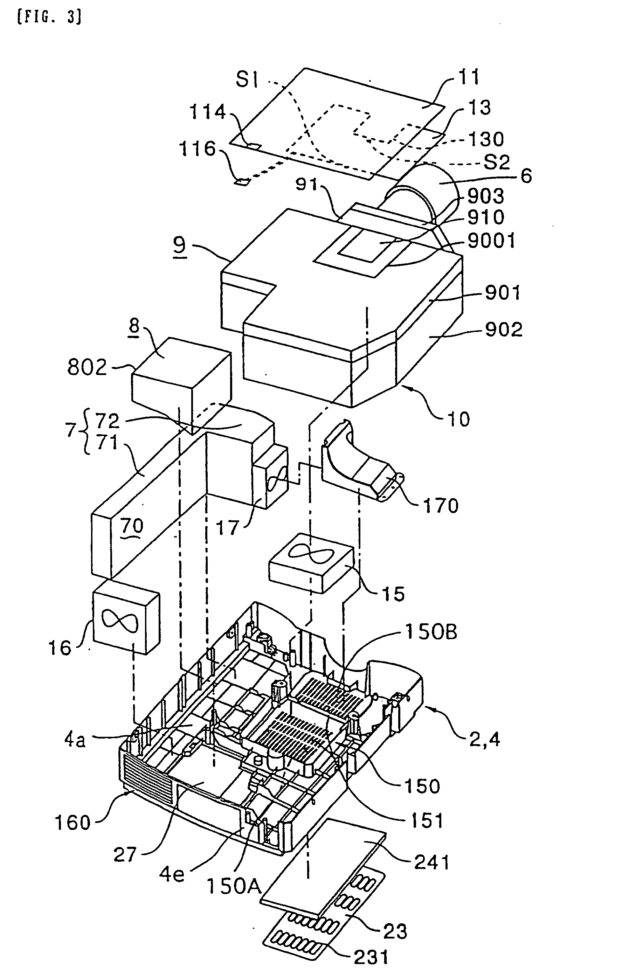

Figure 3 shows arrangement of individual components inside the protective case 2 of the projection display apparatus 1. The protective case 2 is provided with an optical unit 10 including the above-mentioned projection lens unit 6 and a power unit 7 next to each other therein, and a control board 13 for controlling the apparatus and a video board 11 are stacked on the optical unit 10.

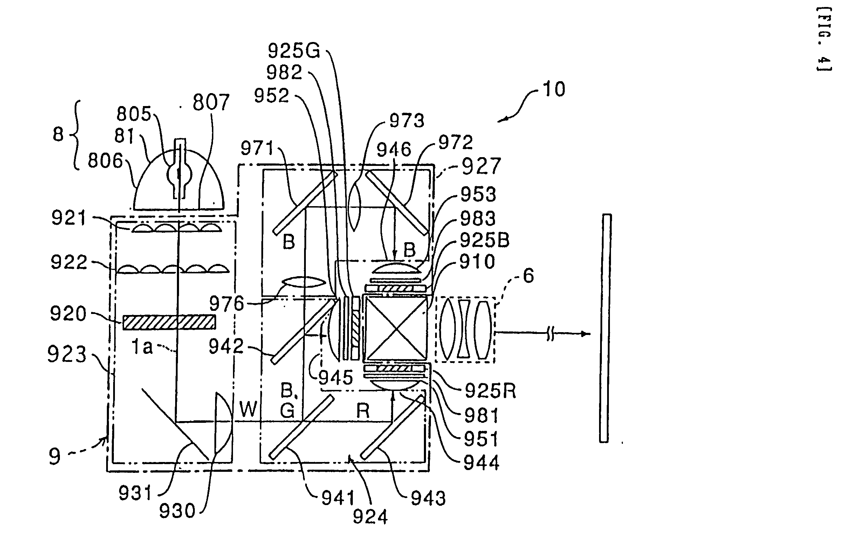

The optical unit 10 includes a light source lamp unit 8 comprising a light source lamp 81 (refer to Figure 4) stored in a housing 802, an optical lens unit 9 for optically treating the light beams emitted from the light source lamp unit 8 and forming an optical image in response to image information, and a projection lens unit 6 expansively projecting the optical image on a projection screen. The optical unit 10 occupies the right half or more of the internal space of the protective case 2 from the rear view.

The optical lens unit 9 includes upper and lower light guides 901 and 902 containing various optical devices as described below and a prism unit 910. The upper and lower light guides 901 and 902 are fixed to the upper case 3 and the lower case 4 shown in Figures 1 and 2, respectively, with fixing screws.

A rectangular cutout 9001 in the plan view is formed in the center on the front side of the light guides 901 and 902 to assemble the prism unit 910.

The prism unit 910 is attached to a thick die-cast head plate 903 composed of magnesium or aluminium, and fixed to the light guides 901 and 902 through the head plate 903.

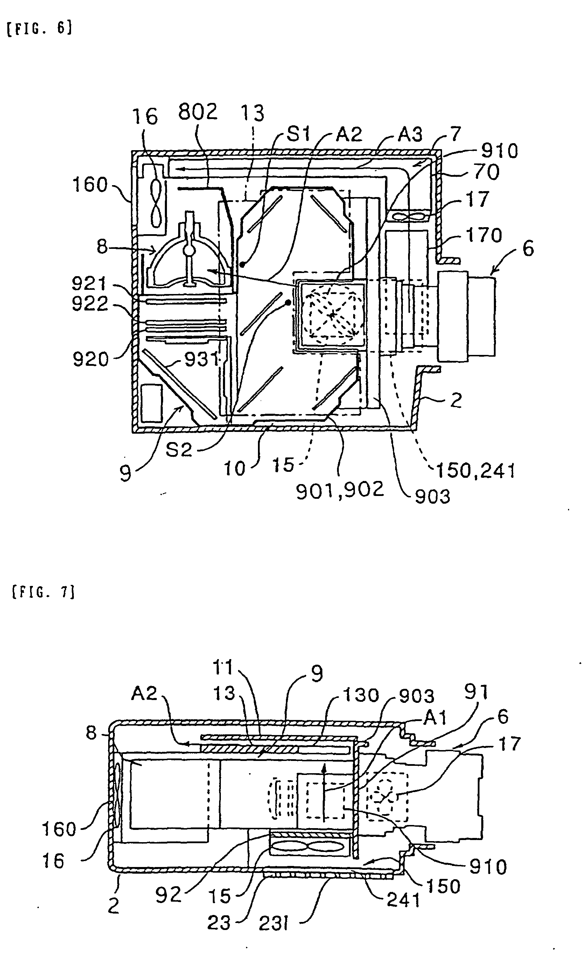

The head plate 903 has an L shape composed of a vertical wall 91 along the width direction of the apparatus and a bottom wall 92 (refer to Figure 7) horizontally extending from the bottom of the vertical wall 91. The prism unit 910 is fixed on the bottom wall 92. In the center of the vertical wall 91, a rectangular opening (not shown in the drawing) is provided to pass through the light emerging from the prism unit 910, and the base end of the projection lens unit 9 is fixed to the opening. The prism unit 910 and the projection lens unit 6 are fixed to the optical lens unit 9 50 as to sandwich the stiff vertical wall 91 therebetween after the optical system is aligned. These units is therefore highly integrally formed, misalignment of the optical system due to strong impact will barely occur.

The base end of the projection lens unit 6 is located in the center of the front side of the optical lens unit 9, and a gap in response to the protruded length of the projection lens unit 6 from the protective case 2 is formed on the side of the base end, i.e., between the head plate 903 and the front walls 3d and 4d of the protective case 2.

The corner section of the rear section of optical lens unit 9 at the side of the power unit 7 is depressed in the plan view, and the light source lamp unit 8 is assembled in the depression. That is, the light source lamp unit 8 is provided at a rectangular domain which is formed by the rear end of the power unit 7 and the depression of the optical lens unit 9.

An lamp-exchanging cover 27 is fixed to a position, corresponding to the light source lamp unit 8, of the bottom wall 4a of the lower case 4 with a screw to exchange the light source lamp unit 8 by loosing the screw and removing the cover 27.

A control board 13 for controlling the apparatus is fixed with screws on the upper face of the optical unit 10 (optical lens unit 9), and a video board 11 including a video signal treating circuit is provided thereon.

Since the control board 13 is fixed to the upper face of the optical unit 10 with screws, the control board 13 and the optical unit 10 can be driven for test by external power even when the whole assembly is not completed as in OEM production in which the control board 13 and the optical unit 10 are fixed. The control board 13 has a cutout section 130 at a section corresponding to, that is, overlapping with the prism unit 910.

The boards 11 and 13 are electrically connected each other through connectors 114 and 116.

The power unit 7 is disposed on the left side of the optical unit 10 in the left side of the protective case 2 in the rear view of the display apparatus 1.

The power unit 7 has an L shape to match the shape of the space between the protective case 2 and the optical unit 10, and consists of a main body 71 which is located from the rear to the front of the apparatus and an extension 72 bending from the front end of the main body 71. The extension 72 is located at the side of the base end of the projection lens unit 6.

Accordingly, the gap at the side of the base end of the projection lens unit 6, which increases as the protruded length of the projection lens unit 6 from the front end of the protective case 2 decreases, is filled with the extension 72 of the power unit 7. The interior of the protective case 2 can therefore be effectively used to miniaturize the projection display apparatus 1.

The power unit 7 contains various electronic parts in an L-shaped metallic shield case 70 which acts as a ventilating path for circulating the cooling air in the power unit 7. Also, the shield case 70 prevents leakage of electrical and magnetic noises generated in the power unit 7, and shields AC input and output lines accompanied with the power unit 7 to shut out noises generated from them.

The shield case 70 stores a primary active filter, a power supply, a ballast and the like, not shown in the drawings, and these consist of circuit boards including various devices. That is, the circuit board of the primary active filter includes devices such as a transmission FET, the circuit board of the power supply includes a rectifier diode bridge, an oscillating transistor for D/D converter and a triode regulator for D/D converter, and the circuit board of the ballast include a driving FET for chopper circuit and a reverse-current preventing diode for chopper circuit. Since these devices are heat sources, these are fixed to heat sinks to enhance cooling efficiency.

Various optical parts are densely packed in the protective case 2 50 as not to form a dead space, it is therefore difficult to provide a conventional metallic chassis over the entire protective case 2. A flexible shielding sheet (not shown in the drawings) can cover the entire case without forming a dead space.

The optical system assembled in the optical unit 10 will now be described with reference to Figure 4. The optical system in accordance with this embodiment includes an illuminating optical system 923 composed of a light source lamp unit 8, integrator lenses 921 and 922 and a polarized light conversion device 920; a color-separating optical system 924 for separating the light beams W emerging from the illuminating optical system 923 into red (R), green (G) and blue (B) light beams; three liquid crystal light valves 925R, 925G and 925B for modulating the color light beams; a prism unit 910 for recombining the modulated light beams; and a projection lens unit 6 for expansively projecting the recombined light beams on a screen.

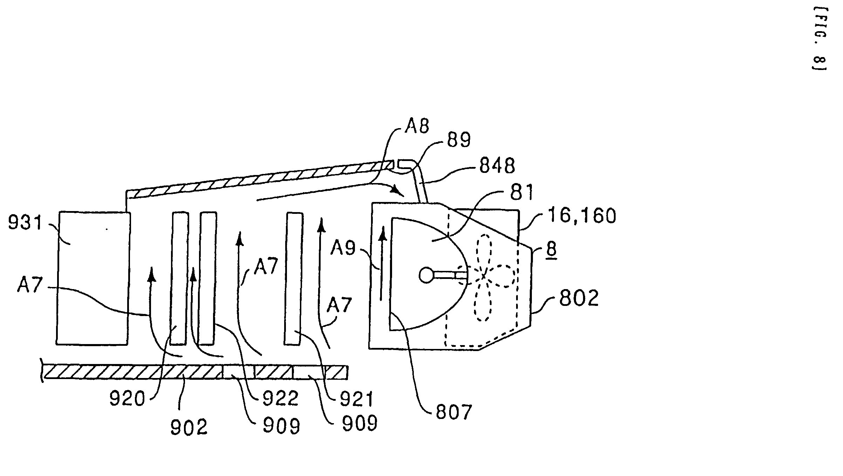

The light source lamp 81 of the light source lamp unit 8 is provided with a lamp 805 such as a halogen lamp, a reflector 806 and a glass face 807 adhered to the front surface of the reflector 806, and stored in a housing 802 50 as to expose the glass face 807 (refer to Figures 3 and 8). The light from the lamp 805 emerges toward the integrator lens 921 of the optical lens unit 9 through the glass face 80 in the direction perpendicular to the direction of the apparatus 1.

Examples of usable light source lamp 81 include halogen lamps, metal halide lamps and xenon lamps.

The illuminating optical system 923 includes two integrator lenses 921 and 922 each composed of a matrix of fine lenses, a polarized light conversion device 920 parallel to the integrator lenses 921 and 922 and a collective lens 930 perpendicular to the polarized light conversion device 920. A reflection mirror 931 is provided ahead of the collective lens 930, that is, between the polarized light conversion device 920 and the collective lens 930 to perpendicularly reflect the central optical axis 1a from the light source lamp 81 toward the front section of the apparatus.

The integrator lens 921 divides the light beams from the light source lamp unit 8 into a plurality of partial light beams which are collected near the integrator lens 922.

The integrator lens 922 arranges central optical paths of partial light beams from the integrator lens 921 50 as to be parallel to the optical axis la. When light beams from the light source lamp unit 8 are perfectly parallel to the optical axis 1a, the central optical path of each partial light beam from the integrator lens 921 is also parallel to the optical axis 1a The integrator lens 922 therefore may be omitted when the light beams from the light source lamp unit 8 are highly parallel to the optical axis 1a.

The collective lens 930 collects partial light beams onto the light valves 925R, 925G and 925B.

As described above, in the projection display apparatus 1 in accordance with this embodiment, the light beams from the light source lamp unit 8 are divided into a plurality of partial light beams with the integrator lens 921, and the partial light beams are collected onto the liquid crystal light valves 925R, 925G and 925B with the collective lens 930. The liquid crystal light valves 925R, 925G and 925B therefore can be illuminated with substantially uniform light, resulting in an image having less irregular illumination.

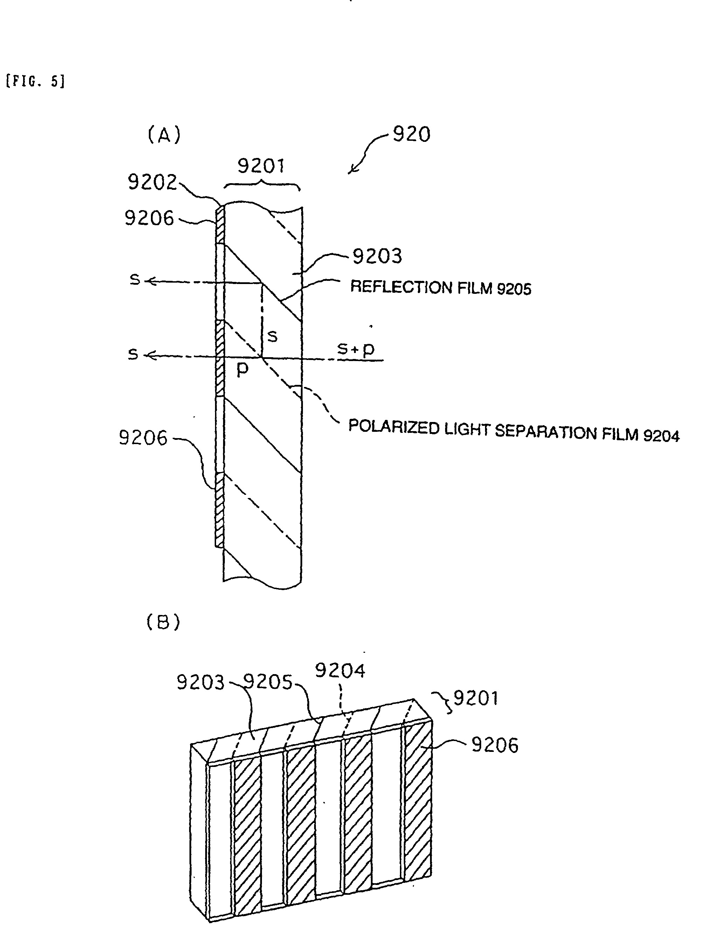

The polarized light conversion device 920 comprises an integration of a polarized light separation film and a λ/2 phase plate which the incident light is separated into P-polarized light and S-polarized light and then unified into S-polarized light. That is, as shown in Figure 5, the polarized light conversion device 920 is provided with a polarized beam splitter array 9201 and a selective phase plate 9202. The polarized beam splitter array 9201 comprises a plurality of pillar transparent plate 9203 each having a parallelogram cross-section, which are bonded to each other. Polarized light separation films 9204 and reflection films 9205 are alternately disposed between the transparent plates. The polarized beam splitter array 9201 is made by bonding a plurality of glass plates having these films each other so as to alternately arrange the polarized light separation films 9204 and reflection films 9205 and obliquely cutting them at a given angle.

The unpolarized light from the integrator lenses 921 and 922 (refer to Figure 4) is separated into s-polarized light and p-polarized light with the polarized light separation film 9204. The s-polarized light is substantially vertically reflected by the polarized light separation film 9204 and vertically reflected by the reflection film 9205. The p-polarized light passes through the polarized light separation film 9204. The selective phase plate 9202 comprises a λ/2 phase layer 9206 formed on the surface of the transparent plate 9203 which transmits the light passing through the polarized light separation film 9204. No λ/2 phase layer is formed on the surface of the transparent plate 9203 which transmits the light reflected from the reflection film 9205. The P-polarized light passing through the polarized light separation film 9204 therefore emerges after being converted to s-polarized light by the λ/2 phase layer 9206. As a result, substantially s-polarized light beams emerges from the polarized light conversion device 920.

The use of only the S-polarized light improves color separation characteristics of dichroic mirrors 941 and 942 (refer to Figure 4) of the color separating optical system 924 described later in relation to use of unpolarized light. Further, the S-polarized light has a higher reflectance than that of the P-polarized light to the mirror, and thus light loss by reflection can be suppressed.

Referring to Figure 4, the color separating optical system 924 includes a blue and green light reflecting dichroic mirror 941, a green light reflecting dichroic mirror 942 and a reflection mirror 943.

In such a color separating optical system 924, the light beams W is radiated to the blue and green light reflecting dichroic mirror 941, and the red light beam passing through the mirror 941 is perpendicularly reflected by a rear reflection mirror 943 and emerges from a red light emerging section 944 toward a prism unit 910.

Blue light beams B and green light beams G in the light beams W are perpendicularly reflected by the blue and green light reflecting dichroic mirror 941 toward the green light reflecting dichroic mirror 942. Only the green light beams are perpendicularly reflected by the green light reflecting dichroic mirror 942 and emerges from a green light emerging section 945 toward the prism unit 910. The blue light beams B passing through the green light reflecting dichroic mirror 942 emerges from a blue light emerging section 946 through a light-guiding system 927 toward the prism unit 910.

The light-guiding system 927 leads the blue light beams B to the corresponding liquid crystal light valve 925B and includes an incident side reflection mirror 971, an emerging side reflection mirror 972, an intermediate lens 973 provided therebetween and a collective lens 976 provided ahead of the incident side reflection mirror 971. Among distances from the illuminating optical system 923 to red (R), green (G) and blue (B) light emerging sections 944, 945 and 946, the distance to the blue (B) light emerging section is the most long. Provision of the light-guiding system 927 prevents light loss.

Red (R) and blue (B) light emerging sections 944 and 945 of the color separating optical system 924 are provided with collective lenses 951 and 952, respectively. Red light beams R and green light beams G emerging from their respective emerging sections 944 and 945 are paralleled by their respective collective lenses 951 and 952.

Parallel red light beams R and green light beams C are incident on liquid crystal light valves 925R and 925G through polarizing plates 981 and 982 to be modulated into image information. A driving means (not shown in the drawings) controls by switching the light valves 925R and 925G in response to the image information to modulate color light beams passing through.

As in red and green light beams R and C, the blue light beams B passing through the light-guiding system 927 are paralleled by the collective lens 953 provided at the blue (B) light emerging section 946, are incident on the liquid crystal valve 925B through a polarizing plate 983, and are modulated in response to the image information.

Examples of usable liquid crystal valves 925R, C, B include use of a polysilicon TFT as a switching device.

The modulated color light beams from the liquid crystal panels 925R, C, B are incident on the prism unit 910 composed of a dichroic prism to be recombined. The recombined color image is expansively projected on a projection screen provided at a given position through the projection lens unit 6.

In the optical unit 10 in accordance with this embodiment, the illuminating optical system 923, the color separating optical system 924, liquid crystal light valves 925R, 925G and 925B, polarizing plates 981 to 983, and the light-guiding system 927 are arranged in the above-mentioned light guides 901 and 902 (refer to Figure 3) after the optical axis is aligned.

In this embodiment having such a configuration, light beams emitted from the light source lamp unit 8 are reflected by the reflection mirror 931, travels a long L-shaped optical path and reaches the prism unit 910 through the color separating optical system 924. The optical path is therefore set to be as long as possible, considering that individual optical parts are arranged in the narrow region. Thus, the light beams from the light source lamp unit 8 are paralleled and transmitted to the liquid crystal light valves 925R, 925B, 925G, while lenses having low F values are used and the positioning space of the integrator lenses 921 and 922 and the polarized light conversion device 920 is sufficiently secured. Since a wide space is secured for the integrator lenses 921 and 922, the number of division of the lenses can be increased. The integrator lenses 921 and 922, therefore, can be arranged close to each other, resulting in miniaturization of the apparatus.

The structure for cooling the projection display apparatus in accordance with the embodiment will now be described with reference to Figures 3, 6 and 7. In the apparatus 1, the open air (cooling air) sucked from a cooling air intake port 150 formed in the protective case 2 is circulated in the protective case 2 to cool heat sources in the case 2 and exhausted from an air outlet 160 on the rear end of the protective case 2.

The cooling air intake port 150 consists of a plurality of vent holes 151 formed on the bottom wall 4a of the lower case 4 as the bottom face of the protective case 2 as shown in Figure 3. These vent holes 151 are formed over the region 150A under the prism unit 910 and the region 150B under the base end of the projection lens unit 6.

The entire regions 150A and 150B having the vent holes 151 are covered with a cellular air filter 241 which is supported by an air filter cover 23 fixed to the exterior of the bottom wall 4a of the lower case 4 with screws. The air filter cover 23 also has a number of vent holes 231. The air filter is provided so as to cover both of the region 150A of the optical lens unit 9 and the region 150B of the projection lens unit 6. Such a single cover structure saves labor for exchanging the air filter 241 and has high reliability to dust control.

The second half of the cooling air intake port 150, i.e., the region 150A under the prism unit 910 is provided with a suction fan 15 for cooling as shown in Figure 7. The suction fan 15 is fixed to the lower face of the bottom wall 92 of the head plate 903 mounting the prism unit 910. The bottom wall 92 of the head plate 903 is provided with a vent hole (not shown in the drawings) for circulating the sucked cooling air.

The first half of the cooling air intake port 150, i.e., the region 150B under the projection lens unit 6 is formed near the extension 72 of the power unit 7 which is located on the base end of the projection lens unit 6. As shown Figure 6, the end of the extension 72, i.e., the end of the shield case 70 at the side of the projection lens unit 6 is used as an inlet of a ventilating path formed in the case 70, and the rear end of the main body 71 or the end of the shield case 70 is used as an outlet of the ventilating path.

The inlet of the ventilating path is provided with an auxiliary cooling fan 17 as a cooling air conducting means (a suction fan for introducing the cooling air into the power unit 7) which introduces air into the ventilating path through the inlet at the front section of the shield case 70. The air in the ventilating path is exhausted from the outlet at the rear section of the case 70.

The auxiliary cooling fan 17 and the region 150B under the projection lens unit 6 are connected each other by a duct cover 170 (a cooling air conducting means) as a duct section forming an air path as shown in Figure 3 to directly introduce the open air from the cooling air intake port 150 to the power unit 7.

An air outlet 160 with an exhaust fan 16 is provided at the rear end of the apparatus, that is, behind the power unit 7 and the light source lamp unit 8. The air outlet is provided at the rear end of the apparatus for convenience of users because the air is not exhausted from the side of the apparatus 1 on which the users generally stand. The exhaust fan 16 is attached to the housing 802 50 as to cover the opening formed on the side face of the housing 802 of the light source lamp unit 8 and exhausts the air in the protective case 2 through the housing 802.

In the above-mentioned projection apparatus 1, the cooling air intake port 150 having the suction fan 15 is provided at the section under the prism unit 910, and the prism unit 910 is surrounded with the liquid crystal light valves 925R, 925C and 925B with given distances excluding the front side facing the projection lens unit 6. The control board 13 covered on the upper face of the optical unit 10 has a cutout section 130 at the position corresponding to the prism unit 910, and the video board 11 is overlaid thereon. The air introduced from the cooling air intake port 150 is sucked by the exhaust fan 16 and rises along the side faces of the prism unit 910 as shown by arrow Al in Figure 7 to cool the prism unit 910, liquid crystal valves 925R, 925C and 925B, and polarizing plates 981 to 983. The cooling air reaching the upper part of the prism unit 910 is sucked by the exhaust fan 16 to travel toward the light source lamp unit 8 through the space between the video board 11 and the control board 13 as shown by arrow A2 in Figure 7, cools the light lamp unit 8, and is exhausted from the air outlet 160. The circuits on the boards 11 and 13 can therefore be cooled by the cooling air introduced from the bottom wall of the protective case 2 to the air path. Since the cooling air also cools the hottest light source lamp unit 8 after cooling the boards 11 and 13, a high cooling efficiency can be achieved.

Since the cooling air from the cooling air intake port 150 provided at the bottom wall of the protective case 2 cools at least the prism unit 910, the liquid crystal light valves 925R, 925C and 925B, the polarizing plates 981, 982 and 983 and the light source lamp unit 8, these parts densely arranged in the narrow region can be effectively cooled, resulting in improved reliability.

The cooling air (open air) is sucked from the cooling air intake port 150 also by means of the auxiliary cooling fan 17 provided on the power unit 7, and introduced into the power unit 7 through the duct cover 170, i.e., the ventilating path in the shield case 70 as shown by arrow A3 in Figure 6. The cooling air is sucked by the exhaust fan 16 to pass through the interior of the power unit 7 from the extension 72 to the main body 71 in order to cool the power unit 7, and it is exhausted from the air outlet 160.

The hot heat sinks provided on the devices in the power unit 7 must be cooled. Since the cooling air (open air) from the cooling air intake port 150 is directly introduced to the ventilating path in the shield case 70, the heat sinks can be effectively and securely cooled. Direct supply of the low-temperature cooling air to the power unit 7 is capable of efficiently dissipating heat from the heat sinks, compared to introduction of the air after cooling other parts to the power unit 7.

Since the auxiliary cooling fan 17 and the first half of the cooling air intake port 150 are connected each other through the duct cover 170, only the cool open air can be introduced from the exterior of the protective case 2 to the ventilating path in the shield case 70 and thus the power unit 7 can be further efficiently cooled.

The use of the auxiliary cooling fan 17 enables stable supply of a large volume of open air to the ventilating path and thus efficient cooling of the power unit 7.

Further, the auxiliary cooling fan 17 is connected to the cooling air intake port 150 through the duct cover 170, and such a configuration can securely prevent the suction of the open air containing foreign matters through the space between the projection lens unit 6 and the protective case 2 when the fan 17 is operated. Adhesion of foreign matters onto the optical system therefore can be securely prevented and a high quality display image is obtainable with high reliability.

As shown in Figures 3 and 6, temperature-sensing elements 51 and S2 are directly mounted on the control board 13 near heating sources, i.e., the prism unit 910 and the liquid crystal light valves 925R, 925C and 925B, and the light source lamp unit 8, respectively. These elements monitor extraordinary temperature rise of the air heated by these heat sources. Direct mount of the temperature-sensing elements 51 and S2 on the control board 13 requires no additional wiring.

In the optical unit 10 in this embodiment as shown in Figure 8, vertical gaps as ventilating paths are provided between the two integrator lenses 921 and 922 and the integrator lens 922 and the polarized light conversion device 920. A plurality of intake ports 909 are provided at regions below the integrated lenses 921 and 922 and the polarized light conversion device 920. These gaps and intake ports 909 form paths which circulate the cooling air along at least one face of the light incident face and the light emerging face of each of the integrator lenses 921 and 922 and the polarized light conversion device 920.

A guide plate 89 is provided above the integrator lenses 921 and 922 and the polarized light conversion device 920 to introduce the cooling air which circulated along at least one face of the light incident face and the light emerging face of each optical element to a hood 848 which is provided on a housing 802 of the light source lamp unit 8.

These optical devices, i.e., the lenses 921 and 922 and the polarized light conversion device 920 are cooled with the cooling air sucked from the above-mentioned cooling air intake port 150 by the suction fan 15.

The cooling air introduced from the cooling air intake port 150 into the protective case 2 is sucked by the exhaust fan 16 provided behind the light source lamp unit 8 and introduced into the optical lens unit 9 through the intake ports 909 of the lower light guide 902. The sucked cooling air rises in the ventilating paths along the light incident and emerging faces of the integrator lenses 921 and 922 and the polarized light conversion device 920 as shown by arrows A7 in Figure 8.

Since the polarized light conversion device 920 among the optical devices partially absorbs incident s-polarized light through the polarized light separation film 9204 and the reflection film 9205 (refer to Figure 5) to generate heat, it must be heated. In the apparatus 1 in this embodiment, the ventilating paths are provided along the polarized light conversion devices 920 to securely cool it by the circulating cooling air.

The cooling air which rose between the polarized light conversion devices 920 and the integrator lenses 921 and 922 while cooling them is introduced to the hood 848 of the housing 802 along the guide plate 89, as shown by arrow A8 of Figure 8, and then into the housing 802 to cool the light source lamp 81 and exhausted from the air outlet 160.

Since the cooling air which cooled the polarized light conversion device 920 and the integrator lenses 921 and 922 is conducted to the light source lamp unit 8 by the guide plate 89, it can securely and effectively cool the hot light source lamp unit 8.

A part of cooling air introduced into the optical lens unit 9 is sucked toward the light source lamp unit 8 by the exhaust fan 16, and rises along the glass face 807 of the light source lamp unit 81 to cool the glass face 807, as shown by arrow A9 of Figure 8. The air, which cooled the glass face 807, is sucked into the housing 802 through the hood 848 of the housing 802 and the gaps between the light source lamp 81 and the housing 802 to cool the light source lamp 81 and exhausted through the air outlet 160.

Accordingly, the light source lamp 81 and the optical elements can maintain high reliability due to highly efficient cooling, and the frequency of exchange of the light source lamp 81 can be decreased, resulting in convenient use.

Although the above-mentioned embodiment describes a case in which the inlet of the ventilating path of the power unit 7 is formed on the end face of the shield case 70 at the side of the projection lens unit 6, the inlet may be provided, for example, on the front side face of the shield case at the projection face. In this case, the cooling air intake port may be provided on the side face of the protective case at the projection face side to directly connect the cooling air intake port with the inlet of the ventilating path.

In accordance with the present invention, since a cooling air conducting means which is provided for directly introducing the open air into a ventilating path provided inside the power unit permits cooling the interior of the power unit by the open air which is cooler than the air in the protective case, the power unit can be cooled with high efficiency.

Also, in accordance with the present invention, a ventilating path which is provided to raise the cooling air along the polarized light conversion device in the protective case is capable of securely circulating the cooling air near the polarized light conversion device regardless of the configuration of the projection display apparatus, resulting in a satisfactory cooling effect.

The aforegoing description has been given by way of example only and it will be appreciated by a person skilled in the art that modifications can be made without departing from the scope of the present invention.

## Claims

1. A projection display apparatus comprising:
an optical unit (9) for forming an optical image in response to image information by optically treating light beams emitted from a light source lamp unit (8) and for expansively projecting the optical image on a projection screen through a projection lens (6), a power unit (7) and a protective case (2) encasing the optical unit and the power unit; a ventilating path (A3) provided inside said power unit for circulating cooling air, a first cooling air intake port (150A) located on the protective case for providing cooling air to the optical unit and a second cooling air intake port (150B) located on the protective case for providing cooling air to the power unit, and a duct (170) for connecting said second cooling air intake port and the ventilating path that directly conducts cooling air from outside of said protective case to said ventilating path.

2. An apparatus according to claim 1, wherein a fan (15) is disposed for drawing in cooling air to the interior of the protective case.

3. An apparatus according to any one of the preceding claims, wherein the power unit is provided with a suction fan (17) disposed adjacent the duct.

4. An apparatus according to any one of the preceding claims, wherein the power unit includes a power unit case having the form of an elongate L shape (71, 72), an inlet of the power unit case being disposed adjacent the air inlet of the protective case and a base end of the optical unit, and the outlet of the power unit case being disposed adjacent an outlet (160) of the protective case.

5. An apparatus according to any one of the preceding claims, said optical unit including a polarised light conversion device (920) for separating the light beams emitted from said light source lamp unit into two types of linear polarised light components (s, p) and for aligning the polarising direction (s) of the linear polarised light components, and
a ventilating path (A7) provided inside said optical unit for circulating cooling air along at least one face of the light incident face and light emerging face of said polarised light conversion device.

6. An apparatus according to claim 5, including a guide (89) for introducing the cooling air circulated along at least one face among the light incident face and light emerging face of said polarised light conversion device to said light source lamp unit.

7. An apparatus according to any one of the preceding claims, wherein the protective casing includes an air outlet (160) for exhausting air from said first and second cooling air intake means with an exhaust fan (16) adjacent thereto.

8. An apparatus according to any one of the preceding claims, including an air filter (241).

9. An apparatus according to any one of the preceding claims, including a temperature-sensing element in the region of said light source lamp unit for control purposes.

## Patentansprüche

1. Projektionsanzeigevorrichtung, umfassend:
eine optische Einheit (9) zum erzeugen eines optischen Bildes in Antwort auf Bildinformation durch optisches Behandeln von Lichtstrahlen, die von einer Lichtquellen-Lampeneinheit (8) emittiert werden, und zum ausgedehnten Projizieren des optischen Bildes auf einen Projektionsschirm durch eine Projektionslinse (6), eine Stromversorgungseinheit (7) und ein Schutzgehäuse (2), das die optische Einheit und die Stromversorgungseinheit umschließt, einen Belüftungspfad (A3), der innerhalb der Stromversorgungseinheit zum Zirkulieren von Kühlungsluft vorgesehen ist, eine erste Kühlungsluft-Ansaugöffnung (150A), die an dem Schutzgehäuse zum Bereitstellen von Kühlungsluft für die optische Einheit angeordnet ist, und eine zweite Kühlungsluft-Ansaugöffnung (150B), die an dem Schutzgehäuse zur Bereitstellung von Kühlungsluft für die Stromversorgungseinheit angeordnet ist, und einen Kanal (170) zum Verbinden der zweiten Kühlungsluft-Ansaugöffnung und des Belüftungspfads, der Kühlungsluft von außerhalb des Schutzgehäuses direkt zu dem Belüftungspfad leitet.

2. Vorrichtung nach Anspruch 1, wobei ein Gebläse (15) angeordnet ist, um Kühlungsluft in das Innere des Schutzgehäuses anzusaugen.

3. Vorrichtung nach einem der vorangehenden Ansprüche, wobei die Stromversorgungseinheit mit einem Ansauggebläse (17) versehen ist, das dem Kanal benachbart angeordnet ist.

4. Vorrichtung nach einem der vorangehenden Ansprüche, wobei die Stromversorgungseinheit ein Stromversorgungseinheitsgehäuse umfasst, das die Form eines länglichen L (71, 72) aufweist, wobei ein Einlass des Stromversorgungseinheitsgehäuses dem Lufteinlass des Schutzgehäuses und einem Basisende der optischen Einheit benachbart angeordnet ist und der Auslass des Stromversorgungseinheitsgehäuses einem Auslass (160) des Schutzgehäuses benachbart angeordnet ist.

5. Vorrichtung nach einem der vorangehenden Ansprüche, wobei die optische Einheit umfasst:
eine Umwandlungsvorrichtung für polarisiertes Licht (920) zum Trennen von Lichtstrahlen, die von der Lichtquellen-Lampeneinheit emittiert werden, in zwei Arten von linear polarisierten Lichtkomponenten (s, p) und zum Ausrichten der Polarisationsrichtung(en) der linear polarisierten Lichtkomponenten und
einen Belüftungspfad (A7), der innerhalb der optischen Einheit im Zirkulieren von Kühlungsluft entlang der Lichteintrittsfläche er/und der Lichtaustrittsfläche der Umwandlungsvorrichtung für polarisiertes Licht vorgesehen ist.

6. Vorrichtung nach Anspruch 5, umfassend eine Führung (89) zum Einführen der Kühlungsluft, die entlang der Lichteintrittsfläche oder/und der Lichtaustrittsfläche der Umwandlungsvorrichtung für polarisiertes Licht zirkuliert ist, zu der Lichtquellen-Lampeneinheit.

7. Vorrichtung nach einem der vorangehenden Ansprüche, wobei das Schutzgehäuse einen Luftauslass (160) umfasst zum Ausstoßen von Luft von dem ersten und dem zweiten Kühlungsluftansaugmittel mit einem diesem benachbarten Ausstoßgebläse (16).

8. Vorrichtung nach einem der vorangehenden Ansprüche, umfassend einen Luftfilter (241 ).

9. Vorrichtung nach einem der vorangehenden Ansprüche, umfassend ein temperaturempfindliches Element im Bereich der Lichtquellen-Lampeneinheit zu Steuerungs/Regelungszwecken.

## Revendications

1. Appareil de représentation visuelle par projection comprenant :
un bloc optique (9) pour former une image optique en réponse à des informations d'images en traitant de manière optique des faisceaux lumineux émis à partir d'une unité de lampe source lumineuse (8) et pour projeter de manière expansive l'image optique sur un écran de projection par l'intermédiaire d'une lentille de projection (6), d'une alimentation de puissance (7) et d'un boîtier de protection (2) renfermant le bloc optique et l'alimentation de puissance ; un chemin de ventilation (A3) fourni à l'intérieur de ladite alimentation de puissance pour faire circuler de l'air de refroidissement, une première prise d'air de refroidissement (150A) placée sur le boîtier de protection pour fournir de l'air de refroidissement au bloc optique et une seconde prise d'air de refroidissement (150B) placée sur le boîtier de protection pour fournir de l'air de refroidissement à l'alimentation de puissance, et un conduit ( 170) pour relier la seconde prise d'air de refroidissement et le chemin de ventilation qui achemine directement de l'air de refroidissement de l'extérieur dudit boîtier de protection jusqu'audit chemin de ventilation.

2. Appareil selon la revendication 1, dans lequel un ventilateur ( 15) est disposé pour attirer de l'air de refroidissement à l'intérieur du boîtier de protection.

3. Appareil selon l'une quelconque des revendications précédentes, dans lequel l'alimentation de puissance est pourvue d'un ventilateur d'aspiration ( 17) disposé en position adjacente au conduit.

4. Appareil selon l'une quelconque des revendications précédentes, dans lequel l'alimentation de puissance comprend un boîtier d'alimentation de puissance ayant la forme d'un L étiré (71, 72), une entrée du boîtier d'alimentation étant disposée en position adjacente à l'entrée d'air du boîtier de protection et à une extrémité de la base du bloc optique, et la sortie du boîtier d'alimentation de puissance étant disposée en position adjacente à une sortie (160) du boîtier de protection.

5. Appareil selon l'une quelconque des revendications précédentes, ledit bloc optique comprenant un dispositif de conversion de la lumière polarisée (920) pour séparer les faisceaux lumineux émis à partir de ladite unité de lampe source lumineuse dans deux types de composants de la lumière linéaire polarisée (s, p) et pour aligner la ou les direction(s) de polarisation des composants de la lumière linéaire polarisée, et
un chemin de ventilation (A7) fourni à l'intérieur dudit bloc optique pour faire circuler de l'air de refroidissement le long d'au moins une face de la face lumineuse incidente et de la face lumineuse émergente dudit dispositif de conversion de la lumière polarisée.

6. Appareil selon la revendication 5, comprenant un guide (89) pour introduire l'air de refroidissement qui circule le long d'au moins une face de la face lumineuse incidente et de la face lumineuse émergente dudit dispositif de conversion de la lumière polarisée vers ladite unité de lampe source lumineuse.

7. Appareil selon l'une quelconque des revendications précédentes, dans lequel le boîtier de protection comprend une sortie d'air (160) pour évacuer l'air desdits premier et second moyens de prise d'air de refroidissement avec un ventilateur aspirant (16) adjacent à celles-ci.

8. Appareil selon l'une quelconque des revendications précédentes, comprenant un filtre à air (241).

9. Appareil selon l'une quelconque des revendications précédentes, comprenant un élément de palpation de la température dans la région de ladite unité de lampe source lumineuse à des fins de contrôle.
